# EUROPEAN PATENT SPECIFICATION

(11) **EP 0 555 587 B1**
(45) Date of publication and mention of the grant of the patent: **17.06.1998**
(21) Application number: 92310897.1
(22) Date of filing: 30.11.1992
(51) Int. Cl.: G06F 12/14

(54) **Computer system with multiple data format and cryptographic module**
Rechnersystem mit Mehrfachdatenformaten und kryptographischem Modul
Système de traitement de données à formats multiples muni d'un module de cryptographie

(30) Priority: 13.02.1992 GB 9203236
(43) Date of publication of application: 18.08.1993
(73) Proprietor: INTERNATIONAL COMPUTERS LIMITED, Putney, London, SW15 1SW (GB)
(72) Inventor: Press, James, Biggleswade, Bedfordshire SG1 0HP (GB)

(56) References cited:
- COMMUNICATIONS OF THE ASSOCIATION FOR COMPUTING MACHINERY, vol. 25, no. 4, April 1982, NEW YORK, US; pages 274 - 286 D.K.GIFFORD 'Cryptographic Sealing for Information Secrecy and Authentication'
- TENTH IEEE SYMPOSIUM ON MASS STORAGE SYSTEMS, 10 May 1990, MONTEREY, US; pages 18 - 25 J.FOGLESONG ET AL 'The Livermore Distributed Storage System: Implementation and Experiences'

## Description

### Background to the Invention

This invention relates to computer systems.

More specifically, the invention is concerned with a mechanism for interfacing between different functional modules in a computer system. The invention is particularly, although not exclusively, concerned with providing a mechanism for interfacing between client application modules and cryptographic modules.

Most cryptographic modules view the data they process as bit strings. Client applications, on the other hand, generally view the data in terms of a character representation, optimised for the underlying hardware of the host machine (eg 8, 9 or 16 bits). This normally means that an implementation of a cryptographic module has to be aware of how bits are encoded in the character representation, and thus different implementations would be required for different machine environments.

Similarly, data which is to be transferred to a different machine environment will normally conform to some agreed transfer format (eg 8 bit ASCII, ASN.1 Basic Encoding Rules). For example, data being transferred from a 9-bit character machine to a 8-bit character machine could be encoded as 8-bit ASCII, the most significant bit not being used on the 9-bit machine. If this data is to be cryptographically processed prior to transfer, the implementation of the cryptographic module would normally need to be aware of this so it does not encrypt the unused bits.

Communications of the Association for Computing Machinery, vol. 25, no. 4, April 1982, New York, US, pages 274-286; D.K.Gifford: "Cryptographic Sealing for Information Secrecy and Authentication" describes a mechanism for sealing objects with a key, to provide protection and authentication. The sealed objects can be passed between a client and a protection mechanism. This paper also mentions the Lisp language, which lends itself to the transformation of objects to byte strings and back again.

The object of the present invention is to provide a novel way of solving the problem of interfacing between functional modules where those modules handle data in different formats.

### Summary of the Invention

According to the invention, there is provided a computer system including a first functional module which handles data in character format, a second functional module which handles data in bit-string format, and a data block holding data in character format for passing to or from the first functional module;
characterised in that said data block is encapsulated as an object comprising:
(a) first and second pointers, respectively indicating a current character position and a current bit-within-character position, thereby defining a current bit position within the data block;
(b) an effective-character-size value, indicating the number of used bits within each character;
(c) a data accessing service, responsive to a call from the second functional module, for accessing a specified number of bits in the data block, starting from the current bit position as defined by said first and second pointers and taking account of said effective-character-size value.

### Brief Description of the Drawings

Figure 1 is a block schematic diagram of a computer system embodying an interface mechanism in accordance with the invention.

Figures 2 - 4 are flow diagrams illustrating the operation of the interface mechanism.

### Description of an Embodiment of the Invention

One computer system in accordance with the invention will now be described by way of example with reference to the accompanying drawings.

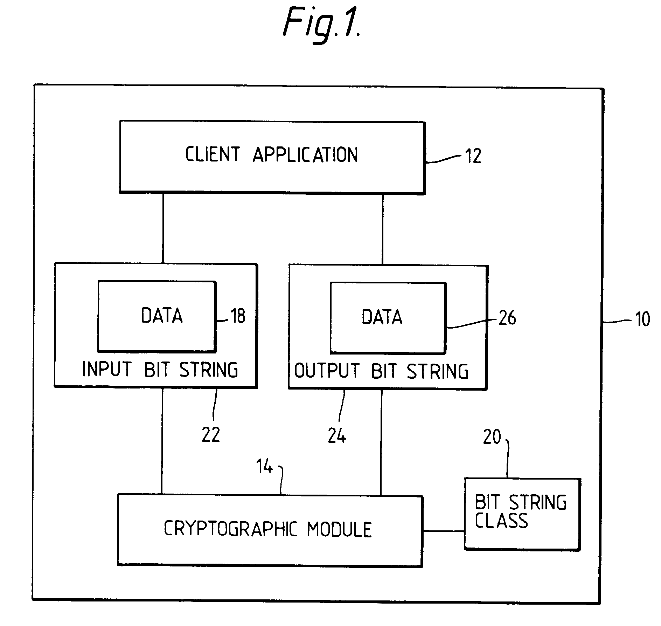

Referring to Figure 1, the system comprises a host computer 10 which may for example, be an ICL DRS 6000 system.

The host computer 10 runs a number of software modules including a client application 12 and a cryptographic module 14. It is assumed that the client application 12 requires to use the services of the cryptographic module 14 to encrypt a specified block of data 18. It is also assumed that the client application 12 views the data in terms of a character representation, while the cryptographic module 14 views the data in terms of a bit string.

The present system is implemented using a technique known as object oriented design, using the C programming language. For further details of object oriented design reference is made to "Object-Oriented Analysis", P Coad & E Yourdan, Prentice Hall (1991), and "Object-Oriented Design", P Coad & E Yourdan, Prentice Hall, 1991.

Conventional design methods are based on the use of functional decomposition, where large problems are broken into smaller ones by concentrating on dividing the major steps which appear in the flow of control. The main limitation of designs produced by such methods is that they are not particularly good at coping with change, which often accounts for the majority of a software system's life.

The main distinction between Object-Oriented Design (OOD) and conventional design is that it is object-oriented and not process-oriented.

Central to OOD is the concept of an 'object'. An object embodies an abstraction of information which is meaningful to its clients. It has the following properties:
a) An object has state encompassing all of the (usually static) properties and the current (usually dynamic) values of each of these properties.
b) An object has behaviour defined by the 'services' it provides to its clients (other objects or programs).

The terms 'operator' or method' are sometimes used instead of 'service'. Clients do not generally directly access the data in an object; they send 'messages' to the object requesting services to be carried out to access or manipulate the actual data in the object. The term 'request' is sometimes used instead of 'message'. A service may be classified as:
- Modifier -: alters the state of an object;
- Selector -: accesses the state of an object without modifying it;
- Iterator -: permits the parts of an object to be visited;
- Constructor -: creates an object initialising its state;
- Destructor -: destroys the object freeing its state.

In this way, objects provide information-hiding by data encapsulation. By avoiding direct client access to the data, a system can guarantee certain integrity constraints of the object. It is also possible to change the object implementation without affecting the clients, unless there is a change in the nature of the services provided.
c) An object has identity and is denoted by a name. To make a request, a client identifies the object which is to perform the service and names the request. Requests may take arguments (including references to other objects) and the service may return one or more results.
d) An object is an instance of some class. A class contains a common structure and a common behaviour applicable to all instances of the class. Classes can be derived from other classes (inheritance).

The present system uses a class referred to herein as a bit string class 20, which can be used to create instances of objects referred to herein as bit string objects, which encapsulate data. More specifically, an input bit string object 22 is created to encapsulate a data block passed from the client application to the cryptographic module, and an output bit string object 24 is created to encapsulate a data block passed from the cryptographic module back to the client application. Bit string objects are also created to encapsulate initialisation vectors and key values used by the cryptographic module.

Each bit string object includes the following data values which represent the state of the object:
- DataStart -: a pointer to the start of the data;
- CharLength -: the length of the data in the machine's character representation;
- BitLength -: the length of the data in bits usable by the algorithm;
- EffectiveCharSize -: the number of used bits within a character;
- BufferDeletion -: a flag which indicates whether the data is freed when the object is deleted;
- CharPtr -: a pointer to the current character position;
- BitPosition -: the current bit position relative to the start of the data;
- BitChar -: the current bit position within the current character.

Each bit string object also includes the following services:
- GoTo -: move current position to an absolute bit or octet position;
- Read -: fetch the next n bits or octets from the current position;
- Write -: write n bits to the current position;
- Forward -: move current position forward by n bits or octets;
- Back -: move current position back by n bits or octets;
- Create -: constructor function for creating a bit string object;
- Release -: destructor function for releasing a bit string object.

In addition, each bit string object also includes various access functions.

In operation, when the client application has a block of data 18 to be processed by the cryptographic module, it calls the cryptographic module and passes it the data block.

The cryptographic module then uses the bit string class 20 to create an input bit string object 22, encapsulating the input data block. It also uses the bit string class 20 to create an output bit string object 24, encapsulating an output data block 26 of sufficient size to hold the data that will be produced by the cryptographic module.

The cryptographic module then uses the services provided by the input bit string object 22 to read the data from the input data block 18, treating it as a bit string. As the data is read, the cryptographic module processes the data, to generate an output bit string, and uses the services provided by the output bit string object 24 to write this bit string into the output data block 26 as a string of characters.

When the cryptographic module has completed its processing, it returns the output data block 26 to the client application.

When the client application has read the output data block, both the bit string objects 22, 24 can be destroyed, using the destructor service of the bit string class object 20.

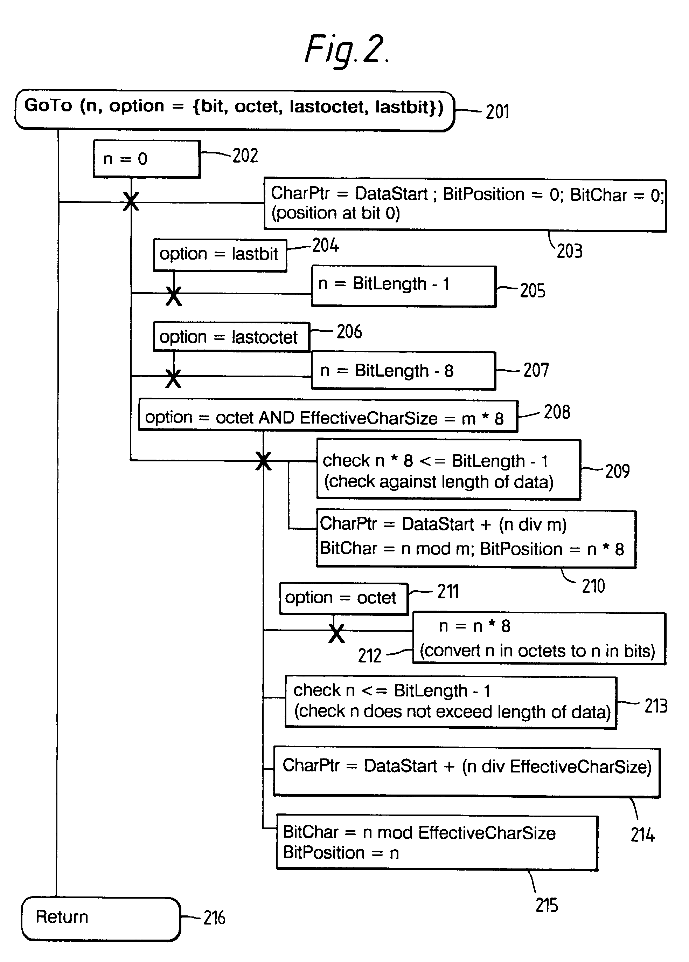

The GoTo service will now be described in more detail with reference to Figure 2.

As mentioned above, this service moves the current position to an absolute bit or octet position within the data.

As shown in box 201, a call to the GoTo service contains two parameters, n and option. The option parameter has one of four values, indicating whether the current position is to be moved to a bit position, an octet position, or to the last octet or bit of the data. The parameter n indicates which bit or octet position.

As shown in boxes 202-203, if n = 0, the character pointer and the bit position are set to point to the first bit of the first character in the data. A return (box 216) is then made from the GoTo service. Otherwise (if n does not equal 0) the following actions are performed.

As shown in boxes 204-207, if the option parameter equals "last bit" or "last octet", the value of n is set to indicate the required position in terms of bits. A return is then made from the GoTo service. Otherwise, the operation continues as follows.

As shown in boxes 208-210, if the option parameter equals "octet" and the effective character size is a multiple (m) of 8, a check is made to ensure that the parameter n does not exceed the length of the data. Assuming this test is satisfactory, then n is divided by m, and the integral part (n div m) of the result is used to position the character pointer, while the remainder (n mod m) is used to determine the bit position within this character. A return is then made from the GoTo service. Otherwise, the operation continues as follows.

As shown in boxes 211-212, if option equals "octet" and the effective character size is not a multiple of 8, the parameter n is multiplied by 8, to convert it to a bit position. The operation then continues as for the case where the option parameter is equal to "bit", as follows.

First, a check (box 213) is made to ensure that n is less than the bit length of the data. If so, n is divided by the effective character size. The integral part of the result is used to position the character pointer, while the remainder determines the bit position within his character (boxes 214, 215). A return (box 216) is then made from the GoTo service.

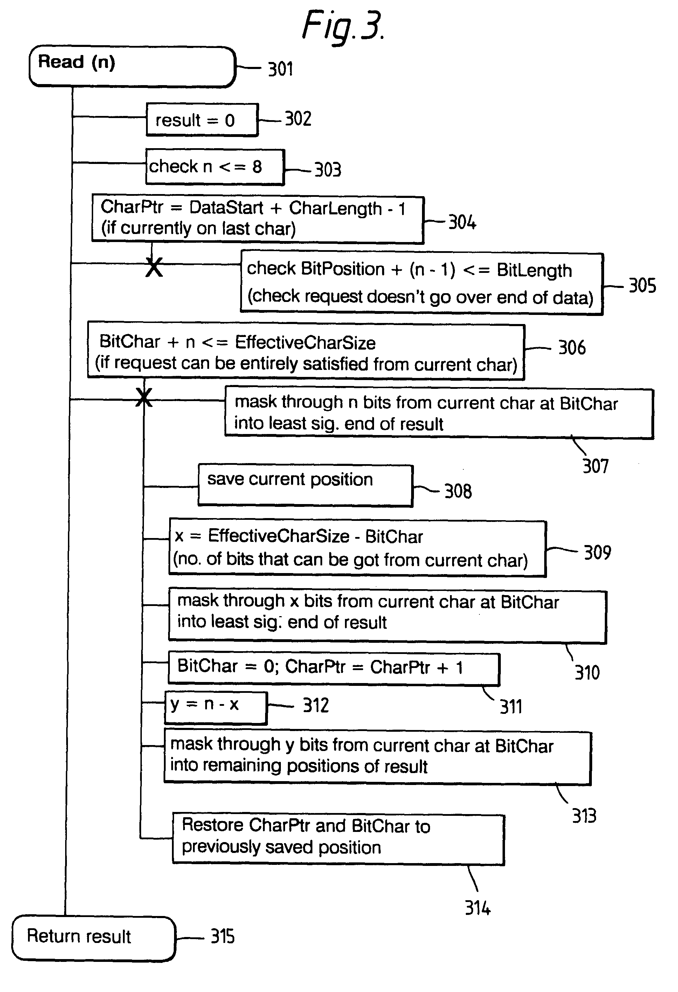

The Read service will now be described in more detail with reference to Figure 3. As mentioned above, this service fetches n bits from the current position.

A call (box 301) to the Read service contains a parameter n which specifies the number of bits to be fetched. In the present embodiment of the invention, the maximum value of n is 8, ie up to 8 bits can be fetched in each Read call.

As shown in boxes 302-303, a result output bit string is initialised to zero, and a check is made that n is less than or equal to the maximum value 8. If it exceeds this value, a return is made with an error message.

As shown in boxes 304-305, if the current position is within the last character of the data, a check is made to ensure that number of bits requested does not go beyond the end of the data. If so, an error return is made.

A check (box 306) is then made to determine whether the current request can be satisfied entirely from within the current character. If so, then as shown in box 307 the next n bits are taken from the current character and placed in the least significant end of the result bit string. A return is then made.

If, on the other hand, the current request cannot be satisfied entirely from within the current character, the following actions are performed as shown in boxes 308-314.

First, the current position is saved. The number (x) of bits that can be obtained from the current character is then determined, and these x bits are taken from the current character and placed in the least significant end of the result bit string. The character pointer is then advanced by one, and the bit position within the character reset to zero. The number y of bits still required is then determined, and these y bits are then taken from the new character position and placed into the remaining positions of the result bit string. Finally, the previously saved position is restored, and a return (box 317) is made.

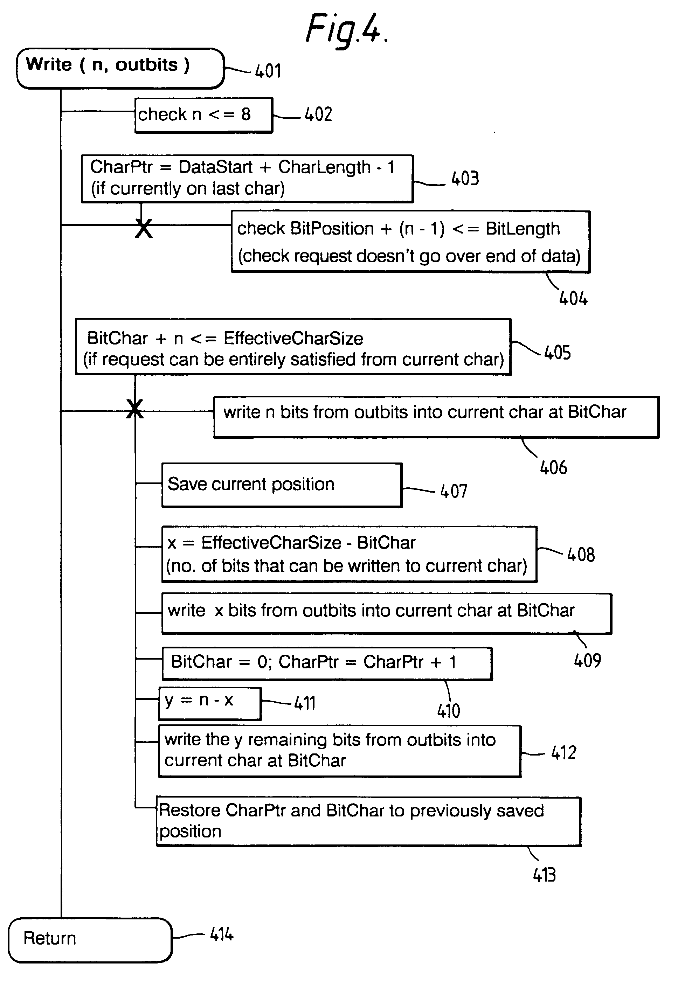

The Write service will now be described in more detail with reference to Figure 4. As mentioned above, this writes n output bits to the current bit position.

A call (box 401) to the Write service contains a parameter n which specifies the number of bits to be written, where n is less than or equal to 8. The call also includes a bit string outbits which contains the bits to be written.

First, a check (box 402) is made to ensure that n does not exceed the permitted maximum value 8. If it does exceed this value, a return is made with an error message.

As shown in boxes 403-404, if the current position is within the last character of the data, a check is made to ensure that the write will not go beyond the end of the data. If so, an error return is made.

A check (box 405) is then made to determine whether the request can be entirely satisfied by writing to the current character. If so, then as shown in box 406 n bits from the outbits string are written to the data at the current bit position. A return is then made (box 414).

If, on the other hand, it is determined that the request cannot be entirely satisfied by writing to the current character, the following actions are performed, as shown in boxes 407-413.

First, the current position is saved. The number of bits x that can be written to the current character is then determined, and the first x bits of the outbits string are written to the data at the current position. The character pointer is then advanced by one and the bit position within the character is reset to zero. The number of remaining bits y is then determined, and the y remaining bits of the outbits string are written to the new current position. Finally, the previously saved position is restored, and a return (box 416) is made.

The Forward and Back services simply adjust the positions of the various pointers, and need not be described herein in further detail.

## Claims

1. A computer system including a first functional module (12) which handles data in character format, a second functional module (14) which handles data in bit-string format, and a data block (18; 26) holding data in character format for passing to or from the first functional module;
characterised in that said data block is encapsulated as an object (22; 24) comprising:
first (CharPtr) and second (BitChar) pointers, respectively indicating a current character position and a current bit-within-character position, thereby defining a current bit position (BitPosition) within the data block;
an effective-character-size value (EffectiveCharSize), indicating the number of used bits within each character; and
a data accessing service, responsive to a call from the second functional module, for accessing a specified number of bits in the data block, starting from the current bit position as defined by said first and second pointers and taking account of said effective-character-size value.

2. A system according to Claim 1 wherein said data accessing service comprises a "Read" service, responsive to a call from the second functional module, for reading a specified number of bits from the data block, starting from the current bit position as defined by said first and second pointers and taking account of said effective-character-size value.

3. A system according to Claim 1 or 2 wherein said data accessing service comprises a "Write" service, responsive to a call from the second functional module, for writing a specified number of bits to the data block, starting from the current bit position as defined by said first and second pointers and taking account of said effective-character-size value.

4. A system according to any preceding claim wherein said object (22; 24) further includes a "Goto" service, responsive to a call from the second functional module, for setting said first and second pointers to values corresponding to a specified bit position in the data when viewed as a bit string, taking account of said effective-character-size value.

5. A system according to any preceding claim wherein the first functional module is a client application module (12) and the second functional module is a cryptographic services module (14).

6. A system according to any preceding claim wherein the system further includes means for creating an instance of said object (22; 24) from a generalised class object (20).

7. A system according to any preceding claim wherein the said object (22; 24) further includes a "Release" service for releasing that object after use.

## Patentansprüche

1. Rechnersystem mit einem ersten Funktionmodul (12), das Daten im Schriftzeichen-Format verarbeitet, einem zweiten Funktionsmodul (14), das Daten im Bitketten-Format verarbeitet, und einem Datenblock (18, 26), der Daten im Schriftzeichen-Format aufnimmt, um sie in das und von dem ersten Funktionsmodul zu leiten,
**dadurch gekennzeichnet**, daß der Datenblock als ein Objekt (22; 24) eingekapselt ist, das aufweist
erste (CharPtr) und zweite BitChar) Anzeiger, die eine laufende Schriftzeichen-Position und eine laufende Bit-im-Schriftzeichen-Position anzeigen, wodurch eine laufende Bit-Position (BitPosition) innerhalb des Datenblockes festgelegt wird,
einen Wert effektiver Schriftzeichen-Größe (EffectiveCharSize), der die Anzahl von benutzten Bits innerhalb des Schriftzeichens anzeigt, und
einen Datenzugriffservice, der auf einen Anruf von dem zweiten Funktionmodul anspricht, um eine bestimmte Anzahl von Bits im Datenblock zuzugreifen, wobei von der laufenden Bit-Position ausgegangen wird, wie sie durch die ersten und zweiten Anzeiger definiert ist, und der Wert effektiver Schriftzeichen-Größe berücksichtigt wird.

2. System nach Anspruch 1, bei dem der Datenzugriffservice einen "Lese"-Service aufweist, der auf einen Anruf aus dem zweiten Funktionsmodul anspricht, um eine spezielle Anzahl von Bits aus dem Datenblock zu lesen, wobei von der laufenden Bit-Position, wie sie durch die ersten und zweiten Anzeiger definiert ist, ausgegangen wird, und der Wert effektiver Schriftzeichen-Größe berücksichtigt wird.

3. System nach Anspruch 1 oder 2, bei dem der Datenzugriffservice einen "Schreib"-Service aufweist, der auf einen Anruf aus dem zweiten Funktionsmodul anspricht, um eine bestimmte Anzahl von Bits in den Datenblock einzuschreiben, wobei von der laufenden Bit-Position, wie sie durch die ersten und zweiten Anzeiger definiert ist, ausgegangen wird, und der Wert effektiver Schriftzeichen-Größe berücksichtigt wird.

4. System nach einem der vorausgehenden Ansprüche, bei dem das Objekt (22; 24) ferner einen ,,Goto"-Service aufweist, der auf einen Anruf aus dem zweiten Funktionsmodul anspricht, um die ersten und zweiten Anzeiger auf Werte entsprechend einer bestimmten Bit-Position in den Daten einzustellen, wenn eine Bitkette betrachtet wird, wobei der Wert der effektiven Schriftzeichen-Größe berücksichtigt wird.

5. System nach einem der vorausgehenden Ansprüche, bei dem der erste Funktionsmodul ein Kunden-Anwendungsmodul (12) und der zweite Funktionmodul ein kryptographischer Service-Modul (14) ist.

6. System nach einem der vorausgehenden Ansprüche, bei dem das System ferner eine Vorrichtung zur Erzeugung eines Beispiels dieses Objektes (22; 24) von einem Objekt (20) allgemeiner Klasse aufweist.

7. System nach einem der vorausgehenden Ansprüche, bei dem das Objekt (22; 24) ferner einen "Freigabe"-Service zum Freigeben dieses Objektes nach der Benutzung aufweist.

## Revendications

1. Système d'ordinateur incluant un premier module fonctionnel (12) qui manipule des données dans un format caractère, un second module fonctionnel (14) qui manipule des données dans un format chaîne de bits et un bloc de données (18 ; 26) contenant des données dans un format caractère pour les passer au premier module fonctionnel ou pour les faire passer depuis celui-ci,
caractérisé en ce que ledit bloc de données est encapsulé en tant qu'objet (22 ; 24) comprenant :
des premier (CharPtr) et second (BitChar) pointeurs indiquant respectivement une position de caractère courante et une position de bit dans caractère courante pour ainsi définir une position de bit courante (BitPosition) dans le bloc de données ;
une valeur de taille de caractère effective (EffectiveCharSize) qui indique le nombre de bits utilisés dans chaque caractère ; et
un service d'accès aux données, sensible à un appel provenant du second module fonctionnel, pour accéder à un nombre spécifié de bits dans le bloc de données, en partant de la position de bit courante telle que définie par lesdits premier et second pointeurs et en prenant en compte ladite valeur de taille de caractère effective.

2. Système selon la revendication 1, dans lequel ledit service d'accès aux données comprend un service "de lecture", sensible à un appel provenant du second module fonctionnel, pour lire un nombre spécifié de bits dans le bloc de données en partant de la position de bit courante telle que définie par lesdits premier et second pointeurs et en prenant en compte ladite valeur de taille de caractère effective.

3. Système selon la revendication 1 ou 2, dans lequel ledit service d'accès aux données comprend un service "d'écriture", sensible à un appel provenant du second module fonctionnel, pour écrire un nombre spécifié de bits dans le bloc de données, en partant de la position de bit courante telle que définie par lesdits premier et second pointeurs et en prenant en compte ladite valeur de taille de caractère effective..

4. Système selon l'une quelconque des revendications précédentes, dans lequel ledit objet (22 ; 24) inclut en outre un service "GoTo", sensible à un appel provenant du second module fonctionnel, pour établir lesdits premier et second pointeurs à des valeurs correspondant à une position de bit spécifiée dans les données telles que vues en tant que chaîne de bits, en prenant en compte ladite valeur de taille de caractère effective.

5. Système selon l'une quelconque des revendications précédentes, dans lequel le premier module fonctionnel est un module d'application client (12) et le second module fonctionnel est un module de service cryptographique (14).

6. Système selon l'une quelconque des revendications précédentes, dans lequel le système inclut en outre un moyen pour créer un cas dudit objet (22 ; 24) à partir d'un objet de classe généralisée (20).

7. Système selon l'une quelconque des revendications précédentes, dans lequel ledit objet (22 ; 24) inclut en outre un service "de libération" pour libérer cet objet après utilisation.
